# EUROPÄISCHE PATENTSCHRIFT

(11) **EP 0 896 591 B1**
(45) Veröffentlichungstag und Bekanntmachung des Hinweises auf die Patenterteilung: **20.10.1999**
(21) Anmeldenummer: 97921743.7
(22) Anmeldetag: 24.04.1997
(51) Int. Cl.: C08F 8/06

(54) **OXIDIERTE METALLOCEN-POLYOLEFIN-WACHSE**
OXIDISED METALLOCENE-POLYOLEFIN WAXES
CIRES METALLOCENE-POLYOLEFINE OXYDEES

(30) Priorität: 30.04.1996 DE 19617230
(43) Veröffentlichungstag der Anmeldung: 17.02.1999
(73) Patentinhaber: BASF AKTIENGESELLSCHAFT, 67056 Ludwigshafen (DE)
(72) Erfinder: DECKERS, Andreas, D-55234 Flomborn (DE); KINGMA, Arend, Jouke, D-67069 Ludwigshafen (DE); MOLL, Ulrich, D-67487 St. Martin (DE); WEBER, Wilhelm, D-67435 Neustadt (DE)
(86) Internationale Anmeldenummer: EP9702098
(87) Internationale Veröffentlichungsnummer: WO9741158

(56) Entgegenhaltungen:
- EP-A- 0 452 840
- EP-A- 0 487 278
- WO-A-93/24539
- FR-A- 2 101 828

## Beschreibung

Die vorliegende Erfindung betrifft oxidierte Wachse erhältlich durch Oxidation von, mittels Metallocenkatalyse erhältlichen, Polyolefinen eines Molekulargewichts M_{w} im Bereich von 1000 bis 40 000 g/mol. Die mittels Metallocenkatalyse erhältlichen Polyolefine werden im folgenden der Einfachheit halber als Metallocen-Polyolefine bezeichnet.

Außerdem betrifft die vorliegende Erfindung ein Verfahren zur Herstellung von oxidierten Polyolefinwachsen durch Oxidation von Polyolefinen eines Molekulargewichts M_{w} im Bereich von 1000 bis 40 000 g/mol mit sauerstoffhaltigen Agenzien bei einer Temperatur im Bereich von 140 bis 350°C, sowie die Verwendung von oxidierten Wachsen als oder in Überzugsmassen, als oder in Bodenpflegemittel, sowie die Verwendung von oxidierten Polyolefinwachsen als oder in Überzugsmassen für Zitrusfrüchte.

Oxidierte Polyolefinwachse sind bereits bekannt. Sie werden im allgemeinen durch Oxidation von, in der Regel niedermolekularem, Ziegler-Polyethylen, Phillips-Polyethylen (PE-HD) oder auch Hochdruckpolyethylen (PE-LD) mit Luft oder reinem Sauerstoff erhalten, Kunststoff-Handbuch, Bd 4, S.161 ff. Carl-Hanser-Verlag, 1969.

Derartige oxidierte Wachse finden bereits Verwendung als Überzugsmasse für verschiedene Anwendungsgebiete, beispielsweise bei der Oberflächenbehandlung von Fußböden oder Zitrusfrüchten.

Bei der Polyolefinwachs-Oxidation bilden sich unter anderem Carboxyl-Gruppen in oder an den Polymerketten des Ausgangspolyolefins, deren Anzahl über die sogenannte Säurezahl bestimmt werden kann. Eine hohe Säurezahl der Wachse ist generell von Vorteil, da die Wachse besser dispergierbar und applizierbar sind.

Bei der Oxidation von bekannten Phillips-Polyethylen-, Ziegler-Polyethylen- oder insbesondere Hochdruckpolyethylen-Wachsen beobachtet man eine starke Reduktion der Schmelzpunkte der oxidierten Wachse im Vergleich zum Ausgangspolymeren, die einhergeht mit einer unerwünschten Verminderung der Härte der oxidierten Wachse. Gerade aber für den Einsatz als oder in Überzugsmassen, beispielsweise in Fußbodenpflegemitteln oder bei der Zitrusfrüchtekonservierung, ist eine hohe Härte und somit ein hoher Schmelzpunkt, der oxidierten Wachse von Vorteil.

Ferner bildet sich bei der Oxidation der bekannten Polyolefinwachse ein ungünstiges Verhältnis aus Säurezahl zu Verseifungszahl von < 1:1 aus, das in der Regel die Dispergierbarkeit der Wachse in wässerigen Medien ungünstig beeinflußt. Eine Verbesserung der Dispergierbarkeit ist im allgemeinen durch Anhebung von Säurezahl und Verseifungszahl möglich.

Aufgabe der vorliegenden Erfindung war es daher, den genannten Nachteilen abzuhelfen, und insbesondere oxidierte Polyolefinwachse mit relativ hohem Molekulargewicht und gleichzeitig großer Säurezahl, großer Verseifungszahl und vergleichsweise hoher Härte und mit hohem Schmelzpunkt zur Verfügung zu stellen.

Weiterhin war es eine Aufgabe der vorliegenden Erfindung ein Oxidationsverfahren von Polyolefinen zur Verfügung zu stellen, welches oxidierte Polyolefinwachse mit den soeben genannten erwünschten Eigenschaften zugänglich macht.

Demgemäß wurden oxidierte Wachse erhältlich durch Oxidation von, mittels Metallocenkatalyse erhältlichen, Polyolefinen eines Molekulargewichts M_{w} im Bereich von 1000 bis 40 000 g/mol und ein Verfahren zur Herstellung von oxidierten Polyolefinwachsen durch Oxidation von Polyolefinen eines Molekulargewichts M_{w} im Bereich von 1000 bis 40 000 g/mol mit sauerstoffhaltigen Agenzien bei einer Temperatur im Bereich von 140 bis 350°C, dadurch gekennzeichnet, daß man als Polyolefine solche einsetzt, die mittels Metallocenkatalyse erhältlich sind gefunden.

Weiterhin wurde die Verwendung von oxidierten Wachsen als oder in Überzugsmassen, die Verwendung von oxidierten Wachsen als oder in Bodenpflegemittel und die Verwendung von oxidierten Wachsen als oder in Überzugsmassen für Zitrusfrüchte gefunden.

Die den oxidierten Wachsen zugrunde liegenden Polyolefine haben ein gewichtsmittleres Molekulargewicht M_{w}, bestimmt mit der Methode der Gelpermeationschromatographie (GPC) in 1,2,4-Trichlorbenzol bei 135°C mit Polyethylen- oder Polypropylenstandard, im Bereich von 1000 bis 40 000 g/mol, vorzugsweise im Bereich von 2000 bis 20 000 g/mol. Die Dispersität M_{w}/Mₙ der den oxidierten Wachsen zugrunde liegenden Polyolefine, gemessen mit der Methode der GPC wie beschrieben, liegt im allgemeinen im Bereich von 1,5 bis 3,0, vorzugsweise im Bereich von 1,8 bis 2,5.

Die den oxidierten Wachsen zugrunde liegenden Polyolefine können durch die Polymerisation der entsprechenden Monomeren in Gegenwart von Metallocenkatalysatoren (Metallocenkatalyse) erhalten werden.

Gut geeignete Monomere sind Ethylen und C₃- bis C₁₀-Alk-1-ene, also Propylen, 1-Buten, 1-Penten, 1-Hexen, 1-Hepten, 1-Octen, 1-Nonen, 1-Decen. Vorzugsweise verwendet man Ethylen und/oder Propylen als Monomeren.

Die Monomeren können homopolymerisiert werden, oder in jedem Verhältnis miteinander copolymerisiert werden. Bevorzugte Polyolefine die den oxidierten Wachsen zugrunde liegen sind Ethylenhomopolymerisate mit einer Dichte im Bereich von 0,90 bis 0,98 g/cm³, vorzugsweise im Bereich von 0,94 bis 0,97 g/cm³ und einem M_{w}, bestimmt mit der Methode der GPC wie oben beschrieben, im Bereich von 1000 bis 40 000 g/mol, vorzugsweise im Bereich von 2000 bis 20 000 g/mol.

Weiterhin eignen sich als Ausgangspolyolefine Ethylen/C₃- bis C₁₀-Alk-1-en-copolymerisate mit einem Gesamt-Gehalt an, auf das Alk-1-en oder die Alk-1-ene zurückgehenden, Struktureinheiten im Copolymeren im Bereich von 0,1 bis 15 mol-%, vorzugsweise im Bereich von 1 bis 10 mol-%, bezogen auf das Copolymere. Bevorzugte Ethylen/Alk-1-en-copolymerisate sind Ethylen/Propylen-Copolymerisate mit einem Gehalt an, auf das Propylen zurückgehenden Struktureinheiten im Copolymerisate im Bereich von 0,1 bis 10 mol-%, vorzugsweise im Bereich von 1 bis 5 mol-%, bezogen auf das Copolymerisat. Die Copolymerisate haben im allgemeinen ein M_{w}, bestimmt mit der Methode der GPC wie oben beschrieben, im Bereich von 1000 bis 40 000 g/mol, vorzugsweise im Bereich von 2000 bis 20 000 g/mol.

Weitere bevorzugte Polyolefine, die den oxidierten Wachsen zugrunde liegen sind isotaktisches Propylen-Homopolymerisate mit einem Pentadengehalt mmmm an isotaktischen Pentaden, bestimmt mit der Methode der ¹³C-NMR-Spektroskopie, im Bereich von 90 bis 98 % und einem Mw, bestimmt mit der Methode der GPC wie oben beschrieben, im Bereich von 1000 bis 40 000 g/mol, vorzugsweise im Bereich von 2000 bis 20 000 g/mol.

Außerdem eigenen sich auch Copolymerisate des Propylens mit Ethylen und /oder C₄- bis C₁₀-Alk-1-enen als Basispolyolefine. Diese Propylencopolymerisate haben üblicherweise einem Gesamt-Gehalt an, auf das Ethylen und/oder die C₄- bis C₁₀-Alk-1-ene zurückgehenden, Struktureinheiten im Copolymeren im Bereich von 0,1 bis 15 mol-%, vorzugsweise im Bereich von 1 bis 10 mol-%, bezogen auf das Copolymere. Bevorzugte Propylencopolymeren sind Propylen/Ethylen-Copolymerisate mit einem Gehalt an, auf das Ethylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Propylencopolymerisate haben im allgemeinen ein M_{w}, bestimmt mit der Methode der GPC wie oben beschrieben, im Bereich von 1000 bis 40 000 g/mol, vorzugsweise im Bereich von 1000 bis 20 000 g/mol.

Die Monomeren werden in Gegenwart von Metallocenkatalysatoren homo- oder copolymerisiert (Metallocenkatalyse).

Unter Metallocenkatalysatoren sind hier Stoffe zu verstehen, die im allgemeinen durch die Kombination einer Übergangsmetallverbindung oder mehrerer Übergangsmetallverbindungen, vorzugsweise des Titans, Zirkoniums oder Hafniums, die mindestens einen Liganden enthält, der im weitesten Sinne ein Derivat des Cyclopentadienylliganden ist, mit einem Aktivator, auch Cokatalysator oder metalloceniumionenbildende Verbindung genannt, entsteht und im allgemeinen gegenüber den beschriebenen Monomeren polymerisationsaktiv sind. Derartige Katalysatoren sind beispielsweise in EP-A 0 545 303, EP-A 0 576 970 und EP-A 0 582 194 beschrieben. Die erfindungsgemäßen Katalysatorsysteme enthalten als aktive Bestandteile im allgemeinen
A) einen Metallocenkomplex oder mehrere Metallocenkomplexe der allgemeinen Formel (I) 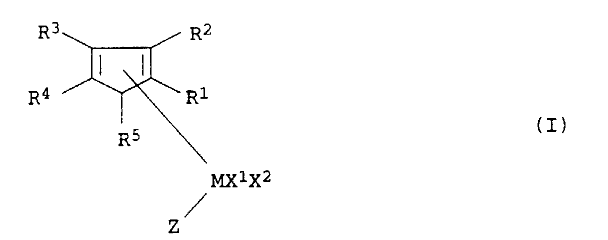 in der die Substituenten und Indizes folgende Bedeutung haben:
   - M: Titan, Zirkonium, Hafnium, Vanadium, Niob, Tantal, Chrom, Molybdän oder Wolfram
   - X¹,X²: Fluor, Chlor, Brom, Iod, Wasserstoff, C₁- bis C₁₀-Alkyl, C₆- bis C₁₅-Aryl, -OR⁶ oder -NR⁶R⁷
   wobei
   - R⁶, R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
   - R¹ bis R⁵: Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁸)₃ mit
   - R⁸: C₁- bis C₁₀-Alkyl, C₆- bis C₁₅-Aryl oder C₃- bis C₁₀-Cycloalkyl,
   - Z: für X¹, X² oder 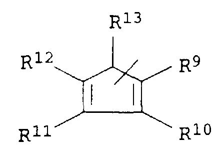 steht,
   wobei die Reste
   - R⁹ bis R¹³: Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁴)₃ mit
   - R¹⁴: C₁- bis C₁₀-Alkyl, C₆- bis C₁₅-Aryl oder C₃- bis C₁₀-Cycloalkyl,
   oder wobei die Reste
   - R⁴ und Z: gemeinsam eine Gruppierung -[Y(R¹⁵) (R¹⁶)]ₙ-E- bilden, in der
   - Y: gleich oder verschieden sein kann und für Silicium, Germanium, Zinn oder Kohlenstoff steht,
   - R¹⁵,R¹⁶: für Wasserstoff, C₁- bis C₁₀-Alkyl, C₃- bis C₁₀-Cycloalkyl oder C₆- bis C₁₅-Aryl
   - n: für die Zahlen 1, 2, 3 oder 4,
   - E: für 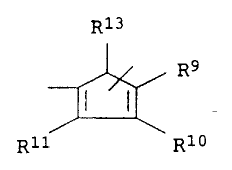 oder A steht, wobei A -O-, -S-, 〉NR¹⁷ oder 〉PR¹⁷ bedeutet,
   - mit R¹⁷: C₁- bis C₁₀-Alkyl, C₆- bis C₁₅-Aryl, C₃- bis C₁₀-Cycloalkyl, Alkylaryl oder Si(R¹⁸)₃
   - mit R¹⁸: C₁- bis C₁₀-Alkyl, C₆- bis C₁₅-Aryl, C₃- bis C₁₀-Cycloalkyl oder Alkylaryl
   und
B) eine metalloceniumionenbildende Verbindung.
   Gut geeignete Übergangsmetallverbindungen (I) sind 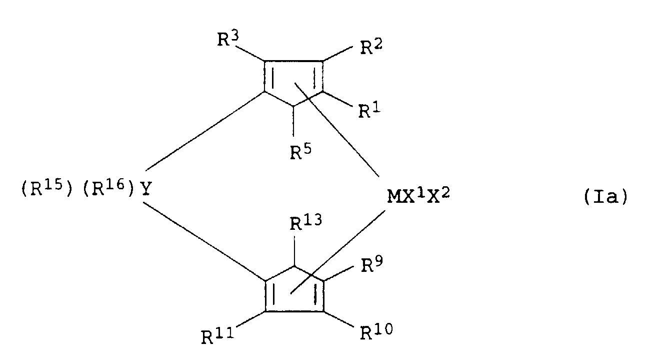 und 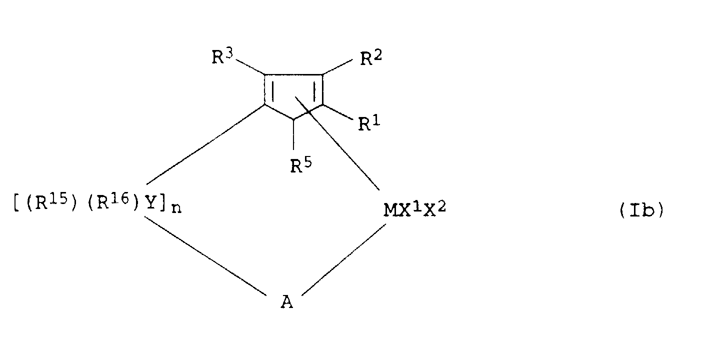 und 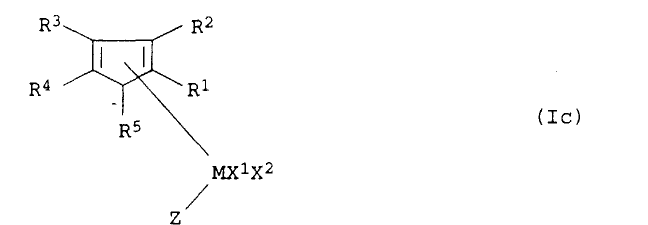 worin Z für X¹, X² oder für 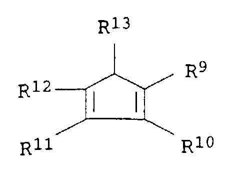 steht, wobei R⁴ und Z keine
   Gruppierung -[Y (R¹⁵) (R¹⁶) 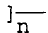 E- bilden.

Unter der Bezeichnung Metallocenkomplex oder Metallocen werden also nicht nur die Bis(η-cyclopentadienyl)-Metall-Komplexe und deren Derivate verstanden.

Die Reste X¹, X² können gleich oder verschieden sein, bevorzugt sind sie gleich.

Von den Verbindungen der Formel (Ia) sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen,
- R², R³, R¹⁰: und R¹¹ die Bedeutung
R³ und R¹¹ C₁- bis C₄-Alkyl,
R² und R¹⁰ Wasserstoff
haben oder zwei benachbarte Reste R² und R³ sowie R¹⁰ und R¹¹ gemeinsam für 4 bis 12 C-Atome aufweisende cyclische Gruppen stehen,
- R¹⁵,R¹⁶: für C₁- bis C₈-Alkyl,
- M: für Titan, Zirkonium oder Hafnium,
- Y: für Silicium, Germanium, Zinn oder Kohlenstoff und
- X¹,X²: für Chlor oder C₁- bis C₄-Alkyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)zirkoniumdichlorid, Dimethylsilandiylbis(-3-tert.butyl-5-ethylcyclopentadienyl)-zirkoniumdichlorid, Dimethylsilandiylbis(-3-tert.butyl-5-methylcyclopentadienyl)-dimethylzirkonium, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-methylindenyl)-zirkoniumdimethyl, Dimethylsilandiylbis[3,3'-(-2-methylbenzindenyl)]-zirkoniumdichlorid, Dimethylsilandiylbis(-2-methylindenyl)-hafniumdichlorid, Dimethylsilandiylbis[3,3'-(2-methylbenzindenyl)]hafniumdichlorid, Dimethylsilandiylbis[3,3'-(2-methylbenzindenyl)zirkoniumdimethyl.

Bei den Verbindungen der allgemeinen Formel (Ib) sind als besonders geeignet diejenigen zu nennen, in denen
- M: für Titan oder Zirkonium,
- X¹,X²: für Chlor oder C₁- bis C₁₀-Alkyl stehen,
- Y: für Silicium oder Kohlenstoff steht, wenn n = 1 ist oder für Kohlenstoff, wenn n = 2 ist

- R¹⁵,R¹⁶: für C₁- bis C₈-Alkyl, C₅- und C₆-Cycloalkyl oder C₆- bis C₁₀-Aryl,
- A: für -O- , -S- , 〉NR¹⁷
und
- R¹ bis R³: und R⁵ für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Von den Verbindungen der Formel (Ic) sind diejenigen besonders gut geeignet, in denen Z für X¹ oder X² steht und X¹ und X² gleich sind. Vorzugsweise ist dann X¹, X² Halogen oder C₁- bis C₄-Alkyl und R¹ bis R⁵ in (Ic) steht dann für C₁-C₄-Alkyl.

Wenn Z in (Ic) für 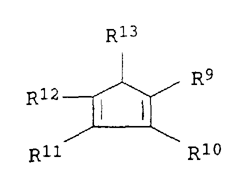 steht, bedeutet X¹, X² vorzugsweise Halogen oder C₁- bis C₄-Alkyl und R¹ bis R⁵ sowie R⁹ bis R¹³ stehen vorzugsweise für Wasserstoff, C₁- bis C₂₀-Alkyl, wie Methyl, Ethyl, n-Propyl, tert.-Butyl, n-Hexyl, n-Octyl, insbesondere Octadecyl.

Beispiele für besonders geeignete Verbindungen (Ic) sind Pentamethylcyclopentadienyltitantrimethyl, Pentamethylcyclopentadienyltitantrichlorid und Bis(octadecylcyclopentadienyl)zirkoniumdichlorid, Biscyclopentadienylzirkoniumdichlorid, Bis(pentamethylcyclopentadienyl)zirkoniumdichlorid, Bis(methylcyclopentadienyl)zirkoniumdichlorid, Bis(n-butylcyclopentadienyl)zirkoniumdichlorid, Bis(n-Octadecylcyclopentadienyl)zirkoniumdichlorid.

Die Synthese derartiger Übergangsmetallverbindungen (I) kann nach an sich bekannten Methoden erfolgen, wobei die Umsetzung der entsprechend substituierten Cycloalkenylanionen mit Halogeniden der Übergangsmetalle, beispielsweise Titan, Zirkonium, Hafnium, Vanadium, Niob, Tantal, Chrom, Molybdän oder Wolfram bevorzugt ist. Beispiele für entsprechende Herstellungsverfahren sind unter anderem in Journal of Organometallic Chemistry, Bd. 369 (1989), Seiten 359 bis 370 beschrieben.

Metalloceniumionenbildende Verbindungen B) sind dem Fachmann bekannt und beispielsweise in WO 95/14044 beschrieben.

Gut geeignet sind beispielsweise offenkettige oder cyclische Alumoxanverbindungen der allgemeinen Formel (II) oder (III) 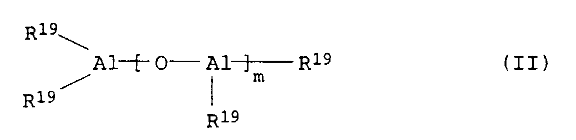 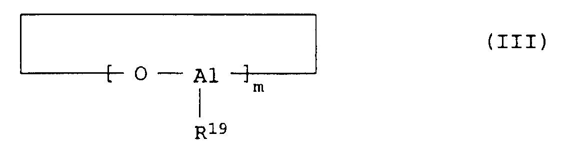 wobei
- R¹⁹: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 1:1 bis 10⁵:1, insbesondere im Bereich von 100:1 bis 1000:1, liegt.

Als metalloceniumionenbildende Verbindung B) können auch Koordinationskomplexverbindungen, aus der Gruppe der starken, neutralen Lewissäuren eingesetzt werden.

Als starke neutrale Lewissäuren sind Verbindungen der allgemeinen Formel IV

M²X³X⁴X⁵ (IV)

bevorzugt, in der
- M²: ein Element der III. Hauptgruppe des Periodensystems bedeutet, insbesondere B, Al oder Ga, vorzugsweise B,
- X³,X⁴ und X⁵: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, wie Fluoraryle, vorzugsweise für Pentafluorphenyl.

Besonders bevorzugt sind Verbindungen der allgemeinen Formel (IV), in der X³, X⁴ und X⁵ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Die metalloceniumionenbildende Verbindungen B) werden üblicherweise für sich alleine, im Gemisch miteinander oder im Gemisch mit metallorganischen Verbindungen der ersten bis dritten Hauptgruppe des Periodensystems der Elemente, beispielsweise n-Butyllithium, Di-n-butylmagnesium, Butyloctylmagnesium, Trimethylaluminium, Triethylaluminium, Triisobutylaluminium, Diisobutylaluminiumhydrid verwendet, wobei das Mischungsverhältnis der Komponenten zueinander im allgemeinen nicht kritisch ist.

Vorzugsweise verwendet man C₁- bis C₁₀-Alkylaluminoxane als metalloceniumionenbildende Verbindung B) und insbesondere Methylaluminoxan.

Die Herstellung der Polymeren aus den olefinisch ungesättigten Kohlenwasserstoffen kann in den üblichen Reaktoren entweder kontinuierlich oder vorzugsweise diskontinuierlich erfolgen.

Geeignete Reaktoren sind unter anderem kontinuierlich betriebene Rührkessel, wobei man gegebenenfalls auch eine Reihe von mehreren hintereinandergeschalteten Rührkesseln verwenden kann. Die Polymerisationsreaktionen lassen sich in der Gasphase, in Suspension, in flüssigen und in überkritischen Monomeren oder in inerten Lösungsmitteln durchführen.

Die Polymerisationsbedingungen sind an sich unkritisch. Drücke von 0,1 bis 500000 kPa, vorzugsweise 100 bis 250 000 und insbesondere 100 bis 100 000 kPa, Temperaturen von 0 bis 450°C, vorzugsweise 20 bis 250°C und insbesondere 50 bis 100°C haben sich als geeignet erwiesen.

Das mittlere Molekulargewicht der Polymeren kann mit den in der Polymerisationstechnik üblichen Methoden gesteuert werden, beispielsweise durch Zufuhr von Molekulargewichtsreglern, wie Wasserstoff, welche im allgemeinen zu einer Reduzierung des Molekulargewichts des Polymeren führt oder durch Variation der Polymerisationstemperatur, wobei hohe Polymerisationstemperaturen üblicherweise zu reduzierten Molekulargewichten führen.

Geeignete Verfahren zur Herstellung von Polyolefinwachsen mittels Metallocenkatalyse sind in WO 88/02009 (Hochdruckverfahren) und in EP-A 0 321 851, EP-A 0 416 566 und EP-A 0 571 882 beschrieben.

In einem bevorzugten Verfahren stellt man insbesondere Polyethylenwachse durch Polymerisation von Ethylen unter Hochdruckbedingungen her. Dazu wird das Ethylen und ggf. falls erwünscht weitere C₃- bis C₁₀-Alk-1-ene auf Drücke oberhalb 50000 kPa, bevorzugt 100000 bis 350000 kPa komprimiert. Um die Polymerisation einzuleiten gibt man nun Katalysatorlösung, die einen geeigneten Aktivator (beispielsweise Aluminiumalkyl und/oder Metylaluminoxan) bzw. ein Borat (z.B. N,N-Dimethylaniliniumtetrakis(pentafluorophenyl)borat enthält, hinzu. Dabei steigt die Reaktionstemperatur im allgemeinen auf Werte bis zu 300°C an, vorzugsweise auf 200 bis 250°C. Die Reaktorform ist an sich unkritisch, denkbar sind der kontinuierlich betriebene Rohrreaktor bzw. der kontinuierlich betriebene gerührte Autoklav. Zur Herstellung der erfindungsgemäßen Polyolefinoxidate ist insbesondere das Katalysatorsystem Bis(n-butylcyclopentadenyl)zirkondichlorid aktiviert mit N,N-Dimethylaniliniumtetrakis(pentafluorophenyl)borat sehr gut geeignet.

Die Oxidation der, den oxidierten Wachsen zugrunde liegenden Polyolefine kann mit Sauerstoff, sauerstoffhaltigen Gasen, vorzugsweise Luft durchgeführt werden. Vorzugsweise verwendet man Luft zur Oxidation der Polyolefine. Zur Unterstützung der Oxidation kann man organische Peroxide, wie z.B. Ditertbutylperoxid zugeben; auch die Zugabe von Schwermetallsalzen wie Manganacetat ist denkbar.

Geeignete Oxidationsverfahren für Polyolefinwachse sind beispielsweise aus DE-A-2035706 bekannt.

In einem bevorzugten Verfahren setzt man das erfindungsgemäße Metallocen-Polyolefin, vorzugsweise ein Ethylenhomopolymerisat, in einem Rohrreaktor oder einem gerührten Autoklaven bei einer Temperatur im Bereich von 140 bis 350°C, vorzugsweise 150 bis 250°C und einem Druck im Bereich von 100 bis 20000 kPa, vorzugsweise im Bereich von 500 bis 4000 kPa mit sauerstoffhaltigen Gasen, vorzugsweise Luft um. Die zugeführte Sauerstoffmenge liegt dann in der Regel im Bereich von 0,1 bis 1000 1 Sauerstoff/hxkg Wachs, vorzugsweise im Bereich von 1 bis 50 1 Sauerstoff/hxkg Wachs.

Die erhältlichen oxidierten Polyolefinwachse, insbesondere die oxidierten Wachse aus Ethylenhomopolymerisat, haben ein Verhältnis von Säurezahl zu Verseifungszahl im Bereich von 1:1 bis 1:4, vorzugsweise im Bereich von 1:1 bis 1:2.

Die Säurezahl wurde mittels Titration nach DIN 53402 bestimmt. Die Verseifungszahl wurde mittels Titration nach DIN 53401 bestimmt. Geeignete Säurezahlen sind 1-150 g KOH/g, bevorzugt 10-50 g KOH/g und besonders bevorzugt 15-30 g KOH/g. Der Schmelzpunkt der erfindungsgemäßen oxidierten Wachse, bestimmt mit der Methode der Differential Scanning Calorimetry (DSC), nach DIN 51007 liegt üblicherweise in einem Bereich von 90 bis 125°C, vorzugsweise in einem Bereich von 110 bis 125°C.

Die Härte der erfindungsgemäßen oxidierten Wachse bestimmt mit der Methode der Kugeldruckhärte, nach DIN 50133 liegt üblicherweise in einem Bereich von 800 bis 2000 N/mm², vorzugsweise in einem Bereich von 1000 bis 1500 N/mm².

Üblicherweise liegt die Viskosität der erfindungsgemäßen oxidierten Wachse, gemessen mit der Methode Ubbelohde-Schmelzviskosität bei 140°C nach DIN 51562 im Bereich von 100 bis 10 000 cst, vorzugsweise im Bereich von 200 bis 5000 cst.

Die erfindungsgemäßen Wachse eignen sich gut als Überzugsmasse oder als Komponent in Überzugsmassen. Die Überzugsmasse zeichnet sich in der Regel durch ihre hohe Härte und ihren hohen Glanz aus.

### Beispiele

Für die erfindungsgemäßen Beispiele wurden Homo-Polyethylen Wachse, die man durch Polymerisation von Ethylen im Hochdruck hergestellt hat verwendet. Die Polymerisation wurde in einem kontinuierlich betriebenen ll-Hochdruckautoklaven mit Rührmotor durchgeführt. Ethylen und Wasserstoff wurden unter Druck kontinuierlich in den Autoklaven geleitet, wobei der Polymerisationsdruck im Innern des Autoklaven auf 150000 kPa geregelt wurde. In einem separaten Ansatzbehälter wurden die Lösungen von Triisobutylaluminium in Heptan, sowie N,N,Dimethylaniliniumtetrakis(pentafluorphenyl)borat in Toluol zu einer Lösung von Bis(n-butylcyclopentadienyl)zirconiumdichlorid im molaren Verhältnis Zr:Al 1:400 und Zr:B 1:1,2 gegeben. Anschließend wurde sofort, ohne weiter Verweilzeit, die aktive Katalysatorlösung kontinuierlich in den Autoklaven dosiert und die Reaktionstemperatur bei 240°C gehalten. Die Wasserstoffdosierung betrug 120 l/h. Die Ausgangswachse haben folgende Eigenschaften:

| Probe | Fp 1) [°C] | Härte 2) [N/mm2] | Viskosität [140°C]3) [cst.] |
|---|---|---|---|
| 1 | 128,3 | 1170 | 350 |
| 1V^{*)} | 128.7 | 1270 | 380 |

| | | | |
|---|---|---|---|
| ^{*)} Ziegler-Polyethylen-Wachs PE 130 der Fa. Hoechst | | | |
| 1) gemessen nach DIN 51007 | | | |
| 2) gemessen nach DIN 50133 | | | |
| 3) gemessen nach DIN 51562 | | | |

### Beispiele 1, 1V

Die Oxidationen der Wachse 1 und 1V (siehe Tabelle oben) wurden in einem gerührten (Impellerrührer) 1-1-Stahlautoklaven mit Druckhaltung durchgeführt. Man legte das zu oxidierende Wachs vor und erwärmte auf 160°C Nachdem das Wachs geschmolzen war, wurde der Rührer eingeschaltet und Luft (30 l/h kg) durchgeleitet. Die Reaktion wurde beim Erreichen der gewünschten Säurezahl abgebrochen, das oxidierte Wachs abgelassen und analysiert.

| Beispiel | Fp [°C] | Härte [bar] | Visk.140°C] [°C] | Säurezahl 1) [g KOH/g] | Ausgangswachs |
|---|---|---|---|---|---|
| 1 | 121,5 | 730 | 125 | 20,5 | 1 |
| 1V | 117,2 | 660 | 150 | 20,5 | 1V |

| | | | | | |
|---|---|---|---|---|---|
| 1) gemessen nach DIN 53402 | | | | | |

### Anwendungsbeispiele

20 Teile Oxidatwachs aus den Beispielen 1,1 V wurden mit 2 Teilen Morpholin und 5 Teilen Olein in 68 Teilen Wasser versetzt und im Druckautoklaven 15 min. bei 150°C erhitzt. Die so erhaltene Emulsion wurde auf Raumtemperatur abgekühlt, filtriert und anschließend eine Probe zur Glanzmessung entnommen. 3 ml der Dispersion wurden in 60 µm Kastenrakel gefüllt und auf Leder aufgetragen; nach dem Tragen wurden dann die Glanzwerte [85°] gemessen (Gerät der Fa. Dr. Lange, UME-2-Gerät)

| | |
|---|---|
| ohne Beschichtung: | 5,8 |
| mit Disp. aus Beispiel 1 | 8,6 |
| mit Disp. aus Beispiel 1V | 6,4 |

## Patentansprüche

1. Oxidierte Wachse erhältlich durch Oxidation von, mittels Metallocenkatalyse erhältlichen, Polyolefinen eines Molekulargewichts M_{w} im Bereich von 1000 bis 40 000 g/mol, wobei das Verhältnis aus Säurezahl zu Verseifungszahl der oxidierten Wachse im Bereich von 1 : 1 bis 1 : 4 liegt.

2. Oxidierte Wachse nach Anspruch 1, wobei als Polyolefine Ethylenhomo- oder copolymerisate verwendet werden.

3. Verfahren zur Herstellung von oxidierten Polyolefinwachsen durch Oxidation von Polyolefinen eines Molekulargewichts Mw im Bereich von 1000 bis 40 000 g/mol mit sauerstoffhaltigen Agenzien bei einer Temperatur im Bereich von 140 bis 350°C, dadurch gekennzeichnet, daß man als Polyolefine solche einsetzt, die mittels Metallocenkatalyse erhältlich sind.

4. Verfahren nach Anspruch 3, dadurch gekennzeichnet, daß man als sauerstoffhaltige Agenzien Luft verwendet.

5. Verfahren nach den Ansprüchen 3 oder 4, dadurch gekennzeichnet, daß man als Polyolefine Ethylenhomo- oder copolymerisate verwendet.

6. Verwendung von oxidierten Wachsen gemäß den Ansprüchen 1 oder 2 in oder als Überzugsmassen.

7. Verwendung von oxidierten Wachsen gemäß den Ansprüchen 1 oder 2 in oder als Bodenpflegemitttel.

8. Verwendung von oxidierten Wachsen gemäß den Ansprüchen 1 oder 2 in oder als Überzugsmassen für Zitrusfrüchte.

## Claims

1. An oxidized wax obtainable by oxidation of a polyolefin obtainable by means of metallocene catalysis and having a molecular weight M_{w} in the range from 1000 to 40,000 g/mol, wherein the ratio of acid number to saponification number of the oxidized wax is in the range from 1:1 to 1:4.

2. An oxidized wax as claimed in claim 1, wherein the polyolefin used is an ethylene homopolymer or copolymer.

3. A process for preparing an oxidized polyolefin wax by oxidation of a polyolefin having a molecular weight Mw in the range from 1000 to 40,000 g/mol using oxygen-containing agents at from 140 to 350°C, wherein the polylefin used is obtainable by means of metallocene catalysis.

4. A process as claimed in claim 3, wherein the oxygen-containing agent used is air.

5. A process as claimed in claim 3 or 4, wherein the polyolefin used is an ethylene homopolymer or copolymer.

6. The use of an oxidized wax as claimed in claim 1 or 2 in or as a coating composition.

7. The use of an oxidized wax as claimed in claim 1 or 2 in or as a floor polish.

8. The use of an oxidized wax as claimed in claim 1 or 2 in or as a coating composition for citrus fuits.

## Revendications

1. Cire oxydée pouvant être obtenue par oxydation de polyoléfines, susceptibles d'être obtenues au moyen d'une catalyse au métallocène, ayant une masse moléculaire M_{w} dans l'intervalle de 1000 à 40 000 g/mol, tandis que le rapport de l'indice d'acide à l'indice de saponification de la cire oxydée se situe dans l'intervalle de 1:1 à 1:4.

2. Cire oxydée selon la revendication 1, dans laquelle on utilise comme polyoléfines des homo- ou copolymères d'éthylène.

3. Procédé pour la préparation de cires de polyoléfines oxydées par oxydation de polyoléfines ayant une masse moléculaire M_{w} dans l'intervalle de 1000 à 40 000 g/mol avec des agents contenant de l'oxygène à une température dans l'intervalle de 140 à 350°C, caractérisé par le fait qu'on emploie comme polyoléfines des polyoléfines pouvant être obtenues au moyen d'une catalyse au métallocène.

4. Procédé selon la revendication 3, caractérisé par le fait qu'on emploie de l'air comme agent contenant de l'oxygène.

5. Procédé selon les revendications 3 ou 4, caractérisé par le fait qu'on emploie comme polyoléfines des homo- ou copolymères d'éthylène.

6. Utilisation de cires oxydées selon les revendications 1 ou 2 au sein de, ou à titre de, matières d'enduction.

7. Utilisation de cires oxydées selon les revendications 1 ou 2 au sein de, ou à titre de, produits pour l'entretien des sols.

8. Utilisation de cires oxydées selon les revendications 1 ou 2 au sein de, ou à titre de, matières d'enduction pour agrumes.
